# EUROPÄISCHE PATENTSCHRIFT

(11) **EP 4 036 483 B1**
(45) Veröffentlichungstag und Bekanntmachung des Hinweises auf die Patenterteilung: **15.10.2025**
(21) Anmeldenummer: 22153741.8
(22) Anmeldetag: 27.01.2022
(51) Int. Cl.: F24C 15/20, B01D 46/00, B01D 46/10, B01D 46/58, B01D 46/82

(54) **VORRICHTUNG ZUM ENTFERNEN ORGANISCHER BESTANDTEILE VON KOCHDÜNSTEN AUS EINEM ABLUFTSTROM**
DEVICE FOR REMOVING ORGANIC COMPONENTS FROM COOKING VAPOURS FROM A WASTE AIR STREAM
DISPOSITIF D'ÉLIMINATION DES COMPOSANTS ORGANIQUES DES FUMÉES DE CUISSON D'UN FLUX D'AIR D'ÉVACUATION

(30) Priorität: 28.01.2021 DE 202021100431 U
(43) Veröffentlichungstag der Anmeldung: 03.08.2022
(73) Patentinhaber: Berbel Ablufttechnik GmbH, 48432 Rheine (DE)
(72) Erfinder: SCHOLZ, Berthold, 48496 Hopsten (DE); HOWEST, Andreas, 48607 Ochtrup (DE); THIEBAUT, Marcel, 48432 Rheine (DE)
(74) Vertreter: Schneiders & Behrendt Bochum

(56) Entgegenhaltungen:
- EP-A1- 2 893 967
- US-B1- 6 358 374

## Beschreibung

Die Erfindung betrifft eine Vorrichtung zum Entfernen organischer Bestandteile von Kochdünsten aus einem Abluftstrom, mit einem Gehäuse mit mindestens einer Eintrittsöffnung und mindestens einer Austrittsöffnung für den Abluftstrom, mindestens einem in einem Filterraum des Gehäuses in dem Abluftstrom angeordneten, regenerierbaren Filter zur Einlagerung von organischen Bestandteilen aus dem Abluftstrom in einem Regelbetriebsmodus, wenigstens einem in einem Regenerationsbetriebsmodus aktivierbaren Ventilator zur Erzeugung eines die eingelagerten organischen Bestandteile aus dem Filter lösenden Regenerationsluftstromes, wenigstens einem in dem Regenerationsluftstrom angeordneten Katalysator zur Aufspaltung der aus dem Filter gelösten organischen Bestandteile, und wenigstens einer Verschlusseinrichtung zum Verschließen der Eintrittsöffnung und/oder der Austrittsöffnung in dem Regenerationsbetriebsmodus.

Eine solche Vorrichtung ist in EP 2 893 967 A1 offenbart und unter der Bezeichnung "berbel Umluftfilter permalyt^{®} BUR 150" bereits am Markt erhältlich. Diese Vorrichtung findet insbesondere bei im Umluftbetrieb arbeitenden Dunstabzugshauben Anwendung. Nachteilig an der bekannten Lösung ist der für die Vorrichtung notwendige Bauraum, da der Katalysator im Filterraum ausreichend Abstand zu dem Filter erfordert, sodass der Filterraum sehr groß dimensioniert werden muss. Damit ist die vorbekannte Vorrichtung ungeeignet für den Einbau unter der Küchenarbeitsplatte, insbesondere bei einem Kochfeldabzug, bei dem die Abluft nach unten abgesaugt wird ("downdraft").

Die US 6 358 374 B1 offenbart auch eine eingangs genannte Vorrichtung, wobei der Katalysator hier in einem von dem Filterraum separaten Katalysatorraum des Gehäuses angeordnet ist, wobei Regenerationsluftverbindungen zwischen dem Filterraum und dem Katalysatorraum vorgesehen sind, durch die der Regenerationsluftstrom in dem Regenerationsbetriebsmodus über den Katalysator und den Filter zirkuliert.

Es ist daher Aufgabe der Erfindung, eine verbesserte Vorrichtung anzugeben, die weniger Bauraum erfordert und insbesondere eine Montage unter der Arbeitsplatte bei einem Kochfeldabzug ermöglicht.

Gelöst wird diese Aufgabe durch eine Vorrichtung mit den Merkmalen des Anspruchs 1.

Die Erfindung sieht eine Regenerationsluftführung in dem Katalysatorraum vor, die einen Teil des Regenerationsluftstromes seitlich an dem Katalysator vorbeiführt, um den Katalysator an seiner äußeren Oberfläche zu kühlen. Durch die aktive Kühlung des Katalysators an seiner äußeren Oberfläche kann der Bauraum des Katalysatorraumes verkleinert werden, da geringere Abstände der Katalysatorraumwände zu der gekühlten Oberfläche des Katalysators ausreichend sind. Der vom Filterraum separate Katalysatorraum kann kleiner ausgestaltet werden, als der durch die Separierung von Filter und Katalysator im Filterraum eingesparte Bauraum, sodass die Vorrichtung insgesamt bei gleicher Filterleistung kompakter aufgebaut sein kann. Die Anordnung des Katalysators in dem vom Filterraum separaten Katalysatorraum ermöglicht im Regelbetriebsmodus eine ausreichende Abschirmung, da der Katalysatorraum mit dem Filterraum lediglich über die Regenerationsluftverbindungen verbunden ist, über welche im Regenerationsbetriebsmodus der Regenerationsluftstrom zwischen dem Filterraum und dem Katalysatorraum über den Katalysator und den Filter zirkuliert.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Gemäß einer vorteilhaften Ausgestaltung der Erfindung ist vorgesehen, dass der Katalysatorraum über eine Regenerationslufteingangsverbindung und eine Regenerationsluftausgangsverbindung in Strömungsrichtung des Abluftstromes vor bzw. hinter dem Filter mit dem Filterraum zur Zirkulation des Regenerationsluftstromes über den Katalysator und den Filter verbunden ist, wobei die Strömungsrichtung des Regenerationsluftstroms gegenüber der Strömungsrichtung des Abluftstroms durch den Filter umgekehrt ist. Über die Umkehr der Strömungsrichtung des Regenerationsluftstromes gegenüber dem Abluftstrom in dem Filter lassen sich eingelagerte organische Bestandteile besonders leicht aus dem Filter lösen. Durch die in Strömungsrichtung des Abluftstroms vor dem Filter im Filterraum angeordnete Regenerationslufteingangsverbindung kann der im Regenerationsbetrieb erzeugte Regenerationsluftstrom von dem Filter im Filterraum in den Katalysatorraum geleitet werden, wo die aus dem Filter gelösten organischen Bestandteile von dem Katalysator aufgespalten werden, bevor die über den Katalysator erwärmte Luft durch die Regenerationsluftausgangsverbindung in Strömungsrichtung des Abluftstromes hinter dem Filter wieder in den Filterraum eintritt.

Besonders bevorzugt ist eine Ausführungsform, die vorsieht, dass mindestens zwei regenerierbare Filter zur Einlagerung von organischen Bestandteilen aus dem Abluftstrom in jeweils einem eigenen Filterraum des Gehäuses vorgesehen sind. Mit der Anordnung von zwei Filtern in separaten Filterräumen kann die Filterleistung der Vorrichtung erhöht werden, ohne die Vorteile eines kompakten Aufbaus zu verlieren. Außerdem kann ein Filter in einem Filterraum im Regenerationsbetrieb regeneriert werden, während ein anderer Filter in einem anderen Filterraum weiter im Regelbetriebsmodus organische Bestandteile aus dem Abluftstrom einlagert. Dazu werden die Regenerationsluftverbindungen des im Regelbetriebsmodus verbleibenden Filterraums vorzugsweise durch Klappen verschlossen.

Eine besonders vorteilhafte Ausführung der Erfindung bezieht sich darauf, dass jeder Filterraum eine eigene Eintrittsöffnung und mindestens eine eigene Austrittsöffnung für den Abluftstrom sowie eine Verschlusseinrichtung zum Verschließen der Eintrittsöffnung und/oder der Austrittsöffnung in dem Regenerationsbetriebsmodus aufweist. Über das Verschließen der Eintrittsöffnung und/oder der Austrittsöffnung kann der Filterraum für den Regenerationsmodus abgekapselt werden, sodass der Regenerationsluftstrom einfach zwischen dem Katalysatorraum und dem Filterraum über den Katalysator und den Filter zirkulieren kann. Das Verschließen von Eintrittsöffnung und Austrittsöffnung ermöglicht eine effektive Aufheizung des Filters im Filterraum durch den zwischen dem Filterraum und dem Katalysator im Katalysatorraum im Regenerationsbetrieb zirkulierenden Regenerationsluftstrom. Hierdurch können die eingelagerten organischen Bestandteile besonders effektiv aus dem Filter gelöst werden.

Eine besonders vorteilhafte Ausführung der Erfindung sieht vor, dass jeder Filterraum über eigene Regenerationsluftverbindungen mit dem Katalysatorraum verbunden ist. Mit der Verbindung der Filterräume über die eigene Regenerationsluftverbindungen kann der Katalysator in dem Katalysatorraum mehrere Filter regenerieren, sodass eine weitere Optimierung des für die Vorrichtung genutzten Bauraums möglich ist. Die separate Anordnung des Katalysators im Katalysatorraum ermöglicht die Nutzung zur Aufspaltung von organischen Bestandteilen aus mehreren in unterschiedlichen Filterräumen angeordneten Filtern. So können die in den unterschiedlichen Filterräumen aus den Filtern gelösten organischen Bestandteile des Abluftstroms im gleichen Katalysator aufgespalten werden, für den nur ein Katalysatorraum in der Vorrichtung erforderlich ist, sodass der für die Vorrichtung notwendige Bauraum optimiert genutzt werden kann.

Eine vorteilhafte Ausführung der Erfindung sieht vor, dass jedem Filterraum ein eigener Ventilator zugeordnet ist, wobei der jeweils von dem zugeordneten Ventilator erzeugte Regenerationsluftstrom über den Katalysator entgegen der Strömungsrichtung des Abluftstromes durch den Filter im Filterraum zirkuliert. Mit dem eigenen Ventilator kann für jeden Filterraum sehr leicht separat ein Regenerationsluftstrom erzeugt werden, sodass die Filter in den Filterräumen unabhängig voneinander, aber auch gemeinsam im Regelbetriebsmodus, wo organische Bestandteile aus dem Abluftstrom in dem Filter eingelagert werden, oder im Regenerationsbetriebsmodus, wo die eingelagerten organischen Bestandteile aus dem Filter gelöst werden, betrieben werden können. Für den Wechsel in den Regenerationsbetriebsmodus muss der zugeordnete Ventilator aktiviert werden, um einen Regenerationsluftstrom über den Katalysator in dem jeweiligen Filterraum zu erzeugen.

Besonders vorteilhaft ist eine Ausführungsform, die vorsieht, dass der zirkulierende Regenerationsluftstrom im Regenerationsbetriebsmodus über den Katalysator erwärmt wird und entgegen der Strömungsrichtung des Abluftstromes im Regelbetriebsmodus den Filter durchströmt und darin eingelagerte Bestandteile löst, die dann im Katalysator aufgespalten werden. Damit kann die notwendige Energie für den Katalysator zur Aufspaltung der aus dem Filter gelösten organischen Bestandteile zur Lösung der eingelagerten organischen Bestandteile aus dem Filter genutzt werden. Die über den Katalysator erzeugte Wärmeenergie geht somit durch den zirkulierenden Regenerationsluftstrom im Regenerationsbetriebsmodus nicht ungenutzt verloren.

Weitere Merkmale, Einzelheiten und Vorteile der Erfindung ergeben sich aufgrund der nachfolgenden Beschreibung sowie anhand der Zeichnungen, die ein Ausführungsbeispiel der Erfindung zeigen. Einander entsprechende Gegenstände oder Elemente sind in allen Figuren mit den gleichen Bezugszeichen versehen. Es zeigen:
- Figur 1: erfindungsgemäße Vorrichtung,
- Figur 2: geöffnete Vorrichtung im Regelbetriebsmodus,
- Figur 3: geöffnete Vorrichtung im Regenerationsbetriebsmodus von vorne,
- Figur 4: Detailansicht auf Katalysatorraum,
- Figur 5: geöffnete Vorrichtung im Regenerationsbetriebsmodus von hinten, und
- Figur 6: Detailansicht auf Katalysator.

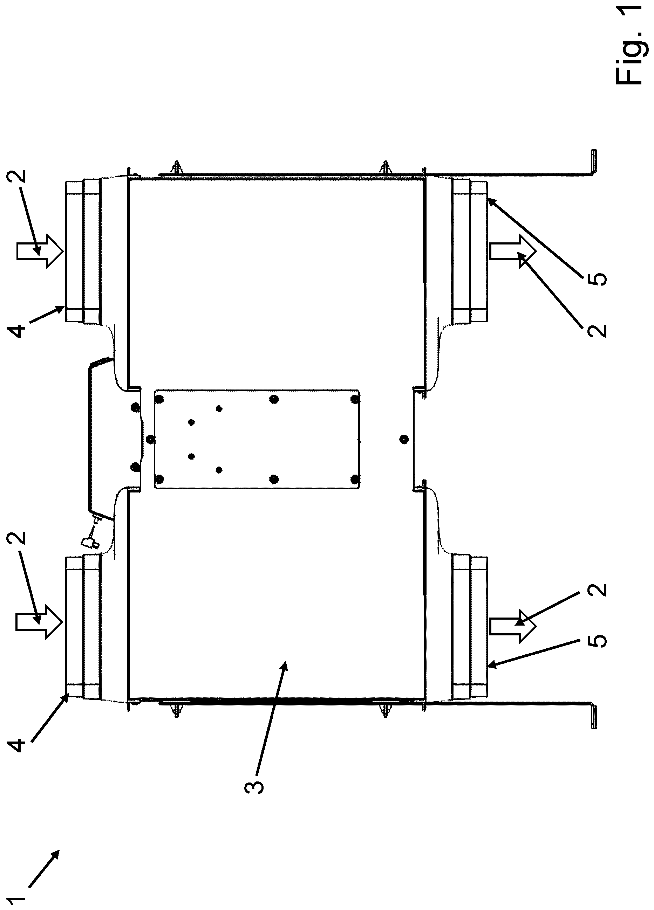

In der Figur 1 mit dem Bezugszeichen 1 bezeichnet ist eine erfindungsgemäße Vorrichtung dargestellt. Die Vorrichtung 1 dient zum Entfernen organischer Bestandteile von Kochdünsten aus einem Abluftstrom 2, der über zwei Eintrittsöffnung 4 in das Gehäuse 3 der Vorrichtung 1 eintreten kann und über zwei Austrittsöffnungen 5 wieder aus dem Gehäuse 3 austritt. Der Abluftstrom 2, der hier durch Blockpfeile angedeutet ist, kann über ein oder mehrere Gebläse (nicht gezeigt) erzeugt werden, die stromaufwärts vor den Eintrittsöffnungen 4 angeordnet den Abluftstrom 2 in das Gehäuse 3 blasen oder stromabwärts hinter der Austrittsöffnung 5 angeordnet den Abluftstrom 2 aus dem Gehäuse 3 saugen. Das hier gezeigte Gehäuse 3 der Vorrichtung 1 ist bewusst sehr flach ausgestaltet, um platzsparend in einem Küchenschrank (rückseitig, an der Rückwand) unterhalb der Arbeitsplatte verbaut werden zu können. Dadurch ist die Vorrichtung 1 besonders geeignet für die Anwendung im Umluftbetrieb eines Kochfeldabzuges. Alternativ kann das Gehäuse 3 der Vorrichtung 1 auch in dem Sockel eines Küchenschranks (unter dem Schrankboden) verbaut werden.

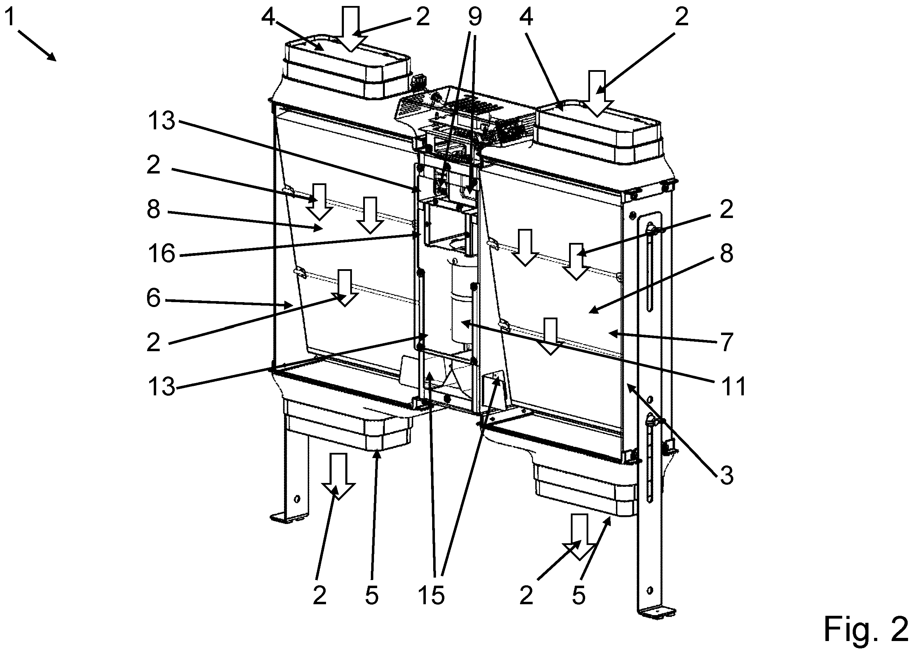

Zur weiteren Erläuterung ist das Gehäuse 3 der Vorrichtung gemäß Figur 1 in der Figur 2 geöffnet dargestellt, sodass der Blick in die Filterräume 6, 7 im Gehäuse 3 frei ist. In den Filterräumen 6, 7 sind jeweils regenerierbare Filter 8 zur Einlagerung von organischen Bestandteilen aus dem Abluftstrom 2 vorgesehen. Jeder Filterraum 6, 7 verfügt über eine eigene Eintrittsöffnung 4 und mindestens eine eigene Austrittsöffnung 5 für den Abluftstrom 2. Die Luft des Abluftstroms 2 durchströmt die schräg eingesetzten Filtermatten der Filter 8 von oben nach unten. Das hier gezeigte Gehäuse 3 weist insgesamt zwei Filterräume 6, 7 auf, es sind aber auch noch mehr Filterräume oder Filter 8 denkbar. Es sind aber auch Ausführungen mit nur einem Filter in einem einzigen Filterraum möglich. In den Filterräumen 6, 7 sind jeweils regenerierbare Filter 8 zur Einlagerung von organischen Bestandteilen aus dem Abluftstrom 2 angeordnet. Im Regelbetriebsmodus filtern die Filter 8 den von der Eintrittsöffnung 4 zur Austrittsöffnung 5 durch den Filterraum 8 strömenden Abluftstrom 2. Dadurch können unangenehme Gerüche aus Kochdünsten in dem Filter 8 gebunden werden, sodass der Abluftstrom 2 im Umluftbetrieb frei von diesen Gerüchen in die Raumluft abgegeben werden kann. Beim Kochen wird der Abluftstrom 2 durch die Aktivkohlematten der Filter 8 geleitet, dort werden die Gerüche verursachenden organischen Bestandteile aus der Abluft gefiltert und im Filter 8 eingelagert.

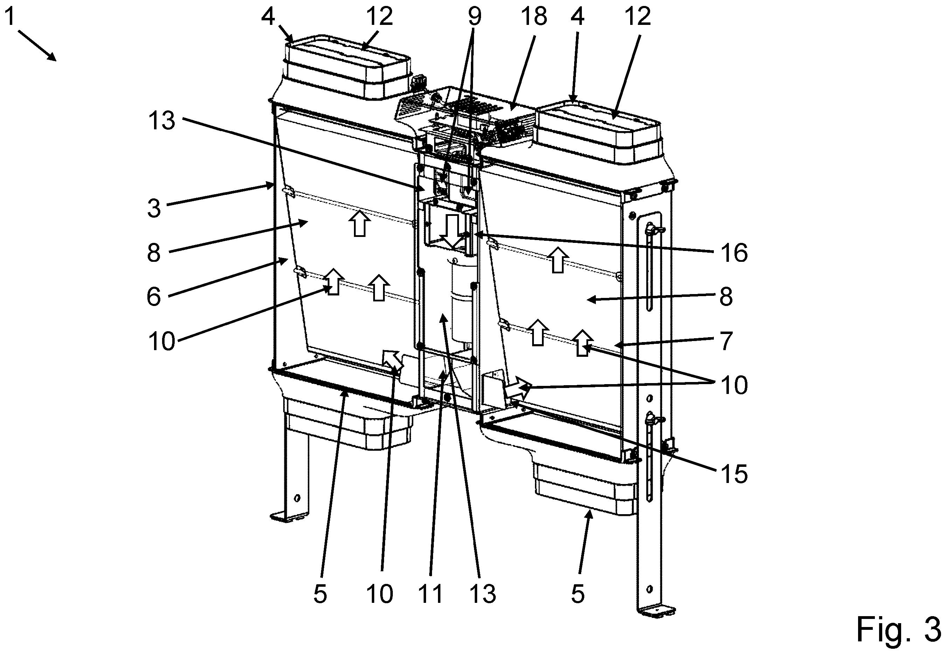

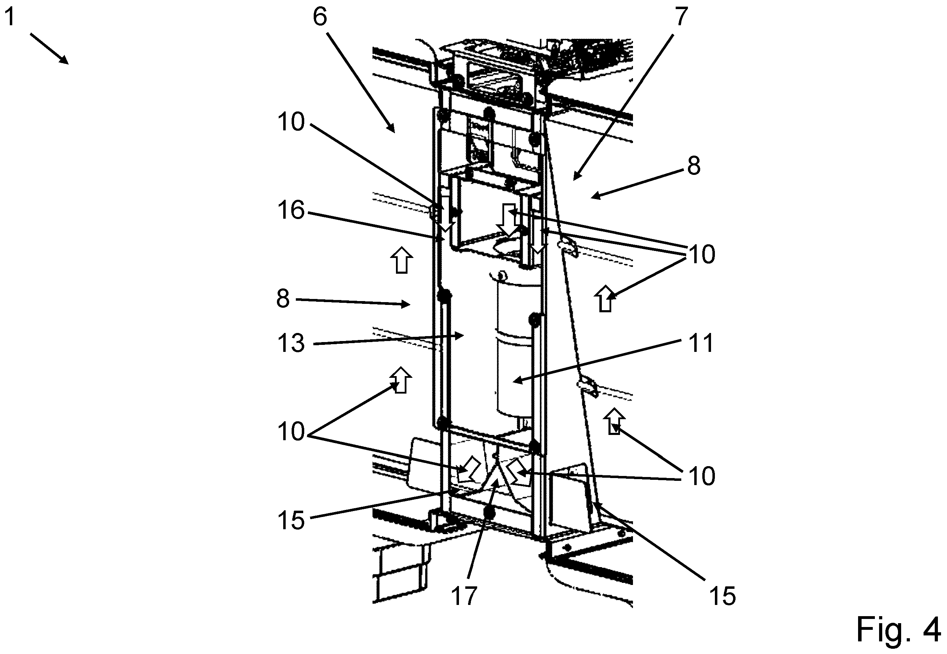

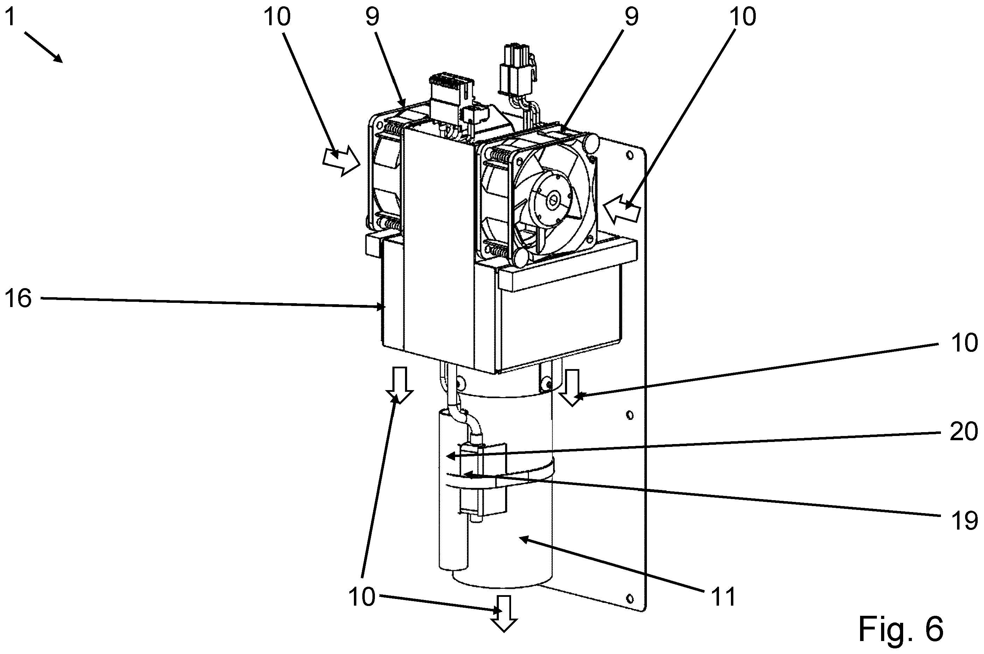

In der Figur 3 ist die Vorrichtung 1 gemäß Figur 2 nicht im Regelbetriebsmodus, sondern in einem Regenerationsbetriebsmodus gezeigt. Der Regenerationsbetriebsmodus startet vorzugsweise nach dem Kochvorgang automatisch. Im Regenerationsbetriebsmodus ist vorgesehen, dass aktivierte Ventilatoren 9 einen die eingelagerten organischen Bestandteile aus dem Filter 8 lösenden Regenerationsluftstrom 10 erzeugen. Im hier gezeigten Ausführungsbeispiel ist jedem Filterraum 6, 7 ein eigener Ventilator 9 zugeordnet, wobei der jeweils von dem zugeordneten Ventilator 9 erzeugte Regenerationsluftstrom 10 über einen Katalysator 11 strömt, welcher der Aufspaltung der aus dem Filter 8 gelösten organischen Bestandteile dient. Die Kochgerüche, also die organischen Bestandteile aus dem Abluftstrom 2, werden im Katalysator 11 durch ein thermokatalytisches Verfahren in Wasser und Kohlendioxid aufgespalten. Zur Geräuschreduzierung ist die Anbindung der Ventilatoren 9 an das Gehäuse 3 vorzugsweise aus dämpfendem Gummi hergestellt, hierdurch lässt sich das Lüftergeräusch deutlich reduzieren. Der Katalysator 11 ist in einem von den Filterräumen 6, 7 separaten Katalysatorraum 13 des Gehäuses 3 angeordnet. Die Separierung des Katalysators 11 im Katalysatorraum 13 ermöglicht eine besonders kompakte Vorrichtung 1. In dem Gehäuse 3 sind Regenerationsluftverbindungen 14, 15 zwischen den Filterräumen 6, 7 und dem Katalysatorraum 13 vorgesehen. Durch diese Regenerationsluftverbindungen 14, 15 zirkuliert der Regenerationsluftstrom 10 in dem Regenerationsbetriebsmodus über den Katalysator 11 und die Filter 8 in den Filterräumen 6, 7. Der Regenerationsluftstrom 10 zirkuliert im Regenerationsbetriebsmodus entgegen der Strömungsrichtung des Abluftstromes 2, hier von unten nach oben, durch den Filter 8 im Filterraum 6, 7, wie anhand der Blockpfeile in Figur 3 erkennbar ist. Der Katalysatorraum 13 verfügt dazu über Regenerationslufteingangsverbindungen 14 in Strömungsrichtung des Abluftstromes 2 vor den Filtern 8 in den Filterräumen 6, 7 und Regenerationsluftausgangsverbindungen 15 in Strömungsrichtung hinter den Filtern 8 in den Filterräumen 6, 7. So verfügt jeder Filterraum 6, 7 über eigene Regenerationsluftverbindungen 14, 15, über welche die Filterräume 6, 7 mit dem Katalysatorraum 13 verbunden sind. Dadurch ist der Katalysatorraum 13 zur Zirkulation des Regenerationsluftstromes 10 über den Katalysator 11 und die Filter 8 mit den Filterräumen 6, 7 verbunden. Für den Regenerationsbetriebsmodus sind die Eintrittsöffnungen 4 und bevorzugt auch die Austrittsöffnungen 5 jeweils über eine Verschlusseinrichtung 12 verschließbar. Während des Kochvorganges werden die Verschlussklappen der Verschlusseinrichtung 12 vorzugsweise durch den Abluftstrom mechanisch geöffnet. Die Verschlussklappen der Verschlusseinrichtung 12 werden vorteilhafterweise nur durch den Luftstrom 2 des Kochfeldabzugs geöffnet, nach dem Ausschalten des Kochfeldabzugs werden die Klappen durch kleine Federn wieder geschlossen. Die Verschlusseinrichtungen 12 bestehen hierzu jeweils aus zwei Aluminium-Klappenteilen, einer Drehachse und einer Schenkelfeder. Beim Einschalten des Kochfeldabzugs bzw. beim Einschalten des Lüfters des Kochfeldabzugs werden die Klappen gegen die Federkraft gespannt, so dass beim Ausschalten des Lüfters diese sich wieder verschließen. Die Strömungsrichtung des Regenerationsluftstroms 10 im Regenerationsbetriebsmodus ist gegenüber der Strömungsrichtung des Abluftstroms 2 im Regelbetriebsmodus durch die Filter 8 umgekehrt. Der zirkulierende Regenerationsluftstrom 10 wird im Regenerationsbetriebsmodus über den Katalysator 11 erwärmt und an einem Luftleitelement 17 (Fig. 4) auf die beiden Filterräume 6, 7 aufgeteilt und durchströmt entgegen der Strömungsrichtung des Abluftstromes 2 im Regelbetriebsmodus den Filter 8 wodurch darin eingelagerte Bestandteile gelöst werden, die dann im Katalysator 11 aufgespalten werden. In Figur 3 ist auch das Zusatzgehäuse 18 gut zu erkennen, in dem eine Steuerelektronik der Vorrichtung 1 angeordnet ist. Das Zusatzgehäuse 18 verfügt außerdem über eine Schnittstelle zum Anschluss eines Kochfeldabzugs an die Steuerelektronik. In dem Kochfeldabzug wird beim Einschalten einer Lüfterstufe dann ein Kontakt geschlossen, welcher einen Stromfluss ermöglicht. Anhand dieses Stromflusses misst die Steuerelektronik der Vorrichtung 1 dann die Betriebsstunden des Kochfeldabzugs, um regelmäßig den Regenerationsbetriebsmodus automatisch zu aktivieren. Die Regeneration der Filter 8 startet vorzugsweise automatisch, entweder nach einer durchgängigen Kochzeit von z.B. 30 min oder nach z.B. 60 min Gesamtkochzeit. Im Regenerationsmodus wird der Katalysator 11 auf ca. 150 - 200°C, vorzugsweise ca. 150 - 160°C, erwärmt. Diese Temperatur wird über die gesamte Regenerationsphase von ca. 120 Minuten über einen Temperatursensor 19 (Fig. 6) gemessen und über die Steuerelektronik geregelt. Sollte der Temperatursensor 19 (Fig. 6) oder die Steuerung einen Defekt aufweisen und die Temperatur von ca. 215°C bzw. ca. 175°C, also ca. 15°C über der vorgesehenen Temperatur, überschritten werden, wird die Stromzufuhr durch eine Schmelzsicherung 20 (Fig. 6) getrennt und die Vorrichtung 1 kühlt ab. Außerdem ist in dem Zusatzgehäuse 18 ein 230 V Netzanschluss zur Stromversorgung der Vorrichtung 1 vorgesehen.

Die Figur 4 zeigt eine vergrößerte Detailansicht auf den Katalysatorraum 13 gemäß Figur 3. In dieser Ansicht ist besser zu erkennen, dass in dem Katalysatorraum 13 eine Regenerationsluftführung 16 vorgesehen ist, die einen Teil des Regenerationsluftstromes 10 seitlich an dem Katalysator 11 vorbeiführt, um den Katalysator 11 an seiner äußeren Oberfläche zu kühlen. Durch diesen Bypass 16 werden auch umliegende Blechteile aktiv gekühlt. Mittels der Regenerationsluftführung 16 kann die Temperatur der umliegenden Gehäuseteile von ca. 100°C auf ca. 60°C reduziert werden. Über die aktive Kühlung des Katalysators 11 an seiner äußeren Oberfläche kann der Bauraum des Katalysatorraumes 13 verkleinert werden, da durch die aktive Kühlung geringere Abstände zu den Katalysatorraumwände ausreichen und auf zusätzliche Isolierungen verzichtet werden kann.

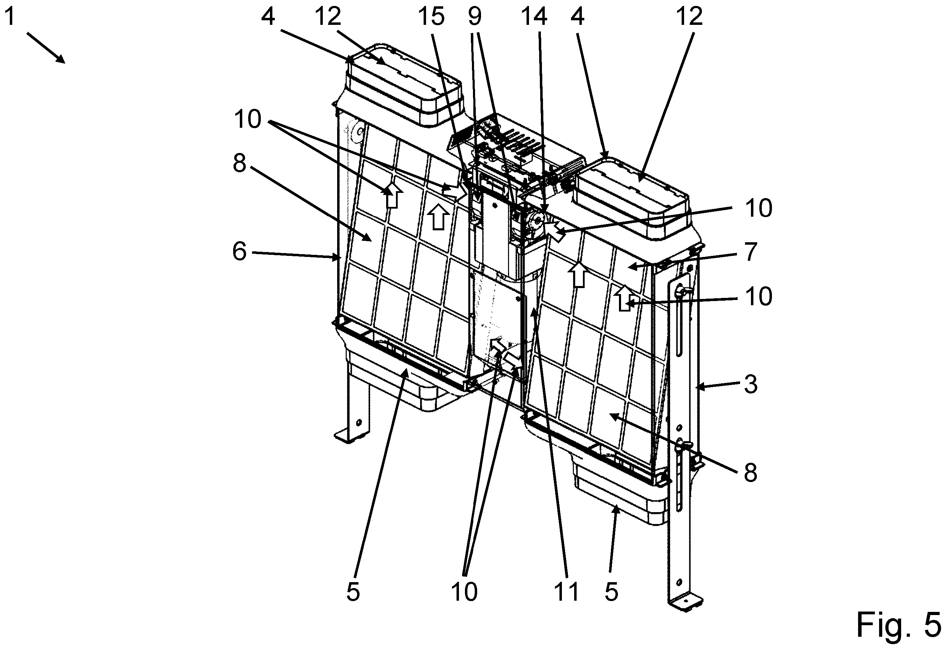

In Figur 5 ist die geöffnete Vorrichtung 1 gemäß Figur 3 ebenfalls im Regenerationsbetriebsmodus, allerdings von der Rückseite gezeigt. Mit den Blockpfeilen angedeutet ist der Regenerationsluftstrom 10, der durch die Filter 8 in den Filterräumen 6, 7 strömt und eingelagerte, organische Bestandteile aus dem Filtermaterial löst und über die Ventilatoren 9 in den Katalysatorraum 13 transportiert. Der Regenerationsluftstrom 10 strömt hierzu über die Regenerationslufteingangsverbindungen 14 in den Katalysatorraum 13, wo die gelösten, organischen Bestandteile aus dem Regenerationsluftstrom 10 im Katalysator 11 aufgespalten werden. Hierbei wird die Luft des Regenerationsluftstroms 10 oben von den Ventilatoren 9 in den Katalysatorraum 13 angesaugt und durch den heißen Katalysator 11 nach unten unterhalb der Filter 8 wieder in die Filterräume 6, 7 ausgeblasen, so dass die heiße Luft (ca. 50-60 °C) die Filtermatten der Filter 8 erwärmt. Beim Erwärmen der Filtermatten lösen sich dann die eingelagerten Geruchsstoffe und werden von den Ventilatoren 9 durch den Katalysator 11 gedrückt. Im Katalysator 11 werden die Geruchsstoffe durch die hohe Temperatur (ca. 150-160 °C) und durch eine Edelmetallbeschichtung oder eine edelmetallfreie Metallmischoxidbeschichtung oder eine Palladium-Oberfläche des Katalysators zu H₂O und CO₂ aufgespalten. Diese Regeneration der Filter 8 kann nahezu unendlich oft wiederholt werden.

Die Figur 6 zeigt noch eine vergrößerte Detailansicht auf den Katalysator 11 gemäß Figur 5. In dieser Detailansicht ist zu erkennen, dass auf der äußeren Oberfläche des Katalysators 11 der Temperatursensor 19 vorgesehen ist, über den die Steuerelektronik den Katalysator 11 steuert. Außerdem ist eine Schmelzsicherung 20 vorgesehen, die eine Sicherheitsabschaltung der Heizpatrone des Katalysators 11 ermöglicht.

### Bezugszeichenliste

- 1: Vorrichtung
- 2: Abluftstrom
- 3: Gehäuse
- 4: Eintrittsöffnung
- 5: Austrittsöffnung
- 6: Erster Filterraum
- 7: Zweiter Filterraum
- 8: Filter
- 9: Ventilator
- 10: Regenerationsluftstrom
- 11: Katalysator
- 12: Verschlusseinrichtung
- 13: Katalysatorraum
- 14: Regenerationslufteingangsverbindung
- 15: Regenerationsluftausgangsverbindung
- 16: Regenerationsluftführung
- 17: Luftleitelement
- 18: Zusatzgehäuse
- 19: Temperatursensor
- 20: Schmelzsicherung

## Patentansprüche

1. Vorrichtung (1) zum Entfernen organischer Bestandteile von Kochdünsten aus einem Abluftstrom (2), mit
- einem Gehäuse (3) mit mindestens einer Eintrittsöffnung (4) und mindestens einer Austrittsöffnung (5) für den Abluftstrom (2),
- mindestens einem in einem Filterraum (6, 7) des Gehäuses (3) in dem Abluftstrom (2) angeordneten, regenerierbaren Filter (8) zur Einlagerung von organischen Bestandteilen aus dem Abluftstrom (2) in einem Regelbetriebsmodus,
- wenigstens einem in einem Regenerationsbetriebsmodus aktivierbaren Ventilator (9) zur Erzeugung eines die eingelagerten organischen Bestandteile aus dem Filter (8) lösenden Regenerationsluftstromes (10),
- wenigstens einem in dem Regenerationsluftstrom (10) angeordneten Katalysator (11) zur Aufspaltung der aus dem Filter (8) gelösten organischen Bestandteile, und
- wenigstens einer Verschlusseinrichtung (12) zum Verschließen der Eintrittsöffnung (4) und/oder der Austrittsöffnung (5) in dem Regenerationsbetriebsmodus,
wobei der Katalysator (11) in einem von dem Filterraum (6, 7) separaten Katalysatorraum (13) des Gehäuses (3) angeordnet ist, wobei Regenerationsluftverbindungen (14, 15) zwischen dem Filterraum (6, 7) und dem Katalysatorraum (13) vorgesehen sind, durch die der Regenerationsluftstrom (10) in dem Regenerationsbetriebsmodus über den Katalysator (11) und den Filter (8) zirkuliert,
**gekennzeichnet durch**
eine Regenerationsluftführung (16) in dem Katalysatorraum (13), die einen Teil des Regenerationsluftstromes (10) seitlich an dem Katalysator (11) vorbeiführt, um den Katalysator (11) an seiner äußeren Oberfläche zu kühlen.

2. Vorrichtung nach Anspruch 1, **dadurch gekennzeichnet, dass** der der Katalysatorraum (13) über eine Regenerationslufteingangsverbindung (14) und eine Regenerationsluftausgangsverbindung (15) in Strömungsrichtung des Abluftstromes (2) vor bzw. hinter dem Filter (8) mit dem Filterraum (6, 7) zur Zirkulation des Regenerationsluftstromes (10) über den Katalysator (11) und den Filter (8) verbunden ist, wobei die Strömungsrichtung des Regenerationsluftstroms (10) gegenüber der Strömungsrichtung des Abluftstroms (2) durch den Filter (8) umgekehrt ist.

3. Vorrichtung (1) nach Anspruch 1 oder 2, **dadurch gekennzeichnet, dass** mindestens zwei regenerierbare Filter (8) zur Einlagerung von organischen Bestandteilen aus dem Abluftstrom (2) in jeweils einem eigenen Filterraum (6, 7) des Gehäuses (3) vorgesehen sind.

4. Vorrichtung (1) nach Anspruch 3, **dadurch gekennzeichnet, dass** jeder Filterraum (6, 7) eine eigene Eintrittsöffnung (4) und mindestens eine eigene Austrittsöffnung (5) für den Abluftstrom (2) sowie eine Verschlusseinrichtung (12) zum Verschließen der Eintrittsöffnung (4) und/oder der Austrittsöffnung (5) in dem Regenerationsbetriebsmodus aufweist.

5. Vorrichtung (1) nach Anspruch 4, **dadurch gekennzeichnet, dass** jeder Filterraum (6, 7) über eigene Regenerationsluftverbindungen (14, 15) mit dem Katalysatorraum (13) verbunden ist.

6. Vorrichtung (1) nach einem der Ansprüche 3 bis 5, **dadurch gekennzeichnet, dass** jedem Filterraum (6, 7) ein eigener Ventilator (9) zugeordnet ist, wobei der jeweils von dem zugeordneten Ventilator (9) erzeugte Regenerationsluftstrom (10) über den Katalysator (11) entgegen der Strömungsrichtung des Abluftstromes (2) durch den Filter (8) im Filterraum (6, 7) zirkuliert.

7. Vorrichtung (1) nach einem der vorhergehenden Ansprüche, **dadurch gekennzeichnet, dass** der zirkulierende Regenerationsluftstrom (10) im Regenerationsbetriebsmodus über den Katalysator (11) erwärmt wird und entgegen der Strömungsrichtung des Abluftstromes (2) im Regelbetriebsmodus den Filter (8) durchströmt, und darin eingelagerte Bestandteile löst, die dann im Katalysator (11) aufgespalten werden.

## Claims

1. A device (1) for removing organic components from cooking vapours from a waste air stream (2), said device comprising
- a housing (3) with at least one inlet opening (4) and at least one outlet opening (5) for the waste air stream (2),
- at least one regenerable filter (8), which is arranged in a filter chamber (6, 7) of the housing (3) in the waste air stream (2), for trapping organic components from the waste air stream (2) in a control operating mode,
- at least one fan (9), which is activatable in a regeneration operating mode, for generating a regeneration air stream (10) releasing the trapped organic components from the filter (8),
- at least one catalyst (11), which is arranged in the regeneration air stream (10), for breaking down the organic components released from the filter (8), and
- at least one closure means (12) for closing the inlet opening (4) and/or the outlet opening (5) in the regeneration operating mode,
wherein the catalyst (11) is arranged in a catalyst chamber (13) of the housing (3) separate from the filter chamber (6, 7), wherein regeneration air connections (14, 15) are provided between the filter chamber (6, 7) and the catalyst chamber (13), through which connections the regeneration air stream (10) circulates via the catalyst (11) and the filter (8) in the regeneration operating mode,
**characterised by**
a regeneration air guide (16) in the catalyst chamber (13), which guides a part of the regeneration air stream (10) laterally past the catalyst (11) in order to cool the catalyst (11) on its outer surface.

2. The device according to claim 1, **characterised in that** the catalyst chamber (13) is connected via a regeneration air intake connection (14) and a regeneration air discharge connection (15) before and after the filter (8), respectively, in the flow direction of the waste air stream (2) for circulation of the regeneration air stream (10) via the catalyst (11) and the filter (8), wherein the flow direction of the regeneration air stream (10) is reversed in relation to the flow direction of the waste air stream (2) through the filter (8).

3. The device (1) according to claim 1 or 2, **characterised in that** at least two regenerable filters (8) for trapping organic components from the waste air stream (2) are provided, in each case in a dedicated filter chamber (6, 7) of the housing (3).

4. The device (1) according to claim 3, **characterised in that** each filter chamber (6, 7) has a dedicated inlet opening (4) and at least one dedicated outlet opening (5) for the waste air stream (2) and a closure means (12) for closing the inlet opening (4) and/or the outlet opening (5) in the regeneration operating mode.

5. The device (1) according to claim 4, **characterised in that** each filter chamber (6, 7) is connected via dedicated regeneration air connections (14, 15) to the catalyst chamber (13).

6. The device (1) according to any one of claims 3 to 5, **characterised in that** each filter chamber (6, 7) is assigned a dedicated fan (9), wherein the regeneration air stream (10) generated in each case by the assigned fan (9) circulates through the filter (8) in the filter chamber (6, 7) via the catalyst (11) against the flow direction of the waste air stream (2).

7. The device (1) according to any one of the preceding claims, **characterised in that** the circulating regeneration air stream (10) is heated in the regeneration operating mode via the catalyst (11) and flows through the filter (8) against the flow direction of the waste air stream (2) in the control operating mode, and releases components trapped therein, which are then broken down in the catalyst (11).

## Revendications

1. Dispositif (1) destiné à éliminer des composants organiques de fumées de cuisson d'un flux d'air d'échappement (2), avec
- un boîtier (3) avec au moins une ouverture d'entrée (4) et au moins une ouverture de sortie (5) pour le flux d'air d'échappement (2),
- au moins un filtre régénérable (8) disposé dans une chambre de filtre (6, 7) du boîtier (3) dans le flux d'air d'échappement (2) destiné à entreposer des composants organiques provenant du flux d'air d'échappement (2) dans un mode de fonctionnement de régulation,
- au moins un ventilateur (9) pouvant être activé dans un mode de fonctionnement de régénération pour générer un flux d'air de régénération (10) libérant les composants organiques entreposés hors du filtre (8),
- au moins un catalyseur (11) disposé dans le flux d'air de régénération (10) pour décomposer les composants organiques libérés hors du filtre (8), et
- au moins un système de fermeture (12) destiné à fermer l'ouverture d'entrée (4) et/ou l'ouverture de sortie (5) dans le mode de fonctionnement de régénération,
dans lequel le catalyseur (11) est disposé dans une chambre de catalyseur (13) du boîtier (3) séparée de la chambre de filtre (6, 7), dans lequel des raccords d'air de régénération (14, 15) sont prévus entre la chambre de filtre (6, 7) et la chambre de catalyseur (13), à travers lesquels le flux d'air de régénération (10) circule dans le mode de fonctionnement de régénération en passant par le catalyseur (11) et le filtre (8),
**caractérisé par**
un guide d'air de régénération (16) dans la chambre de catalyseur (13), qui guide une partie du flux d'air de régénération (10) latéralement le long du catalyseur (11) pour refroidir le catalyseur (11) sut sa surface extérieure.

2. Dispositif selon la revendication 1, **caractérisé en ce que** la chambre de catalyseur (13) est reliée par l'intermédiaire d'un raccord d'entrée d'air de régénération (14) et d'un raccord de sortie d'air de régénération (15) dans la direction d'écoulement du flux d'air d'échappement (2) en amont et en aval du filtre (8) à la chambre de filtre (6, 7) pour faire circuler le flux d'air de régénération (10) en passant par le catalyseur (11) et le filtre (8), dans lequel la direction d'écoulement du flux d'air de régénération (10) est inversée par rapport à la direction d'écoulement du flux d'air d'échappement (2) à travers le filtre (8).

3. Dispositif (1) selon la revendication 1 ou 2, **caractérisé en ce qu'**au moins deux filtres régénérables (8) sont prévus pour entreposer des composants organiques issus du flux d'air d'échappement (2) dans respectivement une chambre de filtre (6, 7) propre du boîtier (3).

4. Dispositif (1) selon la revendication 3, **caractérisé en ce que** chaque chambre de filtre (6, 7) présente une propre ouverture d'entrée (4) et au moins une propre ouverture de sortie (5) pour le flux d'air d'échappement (2) ainsi qu'un système de fermeture (12) destiné à fermer l'ouverture d'entrée (4) et/ou l'ouverture de sortie (5) dans le mode de fonctionnement de régénération.

5. Dispositif (1) selon la revendication 4, **caractérisé en ce que** chaque chambre de filtre (6, 7) est reliée à la chambre de catalyseur (13) par l'intermédiaire de raccords d'air de régénération (14, 15) propres.

6. Dispositif (1) selon l'une quelconque des revendications 3 à 5, **caractérisé en ce qu'**à chaque chambre de filtre (6, 7) est associé un propre ventilateur (9), dans lequel le flux d'air de régénération (10) généré respectivement par le ventilateur (9) associé circule en passant par le catalyseur (11) dans le sens opposé à la direction d'écoulement de l'air d'échappement (2) à travers le filtre (8) dans la chambre de filtre (6, 7).

7. Dispositif (1) selon l'une quelconque des revendications précédentes, **caractérisé en ce que** le flux d'air de régénération (10) qui circule est chauffé par l'intermédiaire du catalyseur (11) dans le mode de fonctionnement de régénération et traverse le filtre (8) dans le sens opposé à la direction d'écoulement du flux d'air d'échappement (2) dans le mode de fonctionnement de régulation, et libère des composants qui y sont entreposés, qui sont ensuite décomposés dans le catalyseur (11).
